# EUROPÄISCHE PATENTSCHRIFT

(11) **EP 0 811 267 B1**
(45) Veröffentlichungstag und Bekanntmachung des Hinweises auf die Patenterteilung: **11.11.1998**
(21) Anmeldenummer: 96901237.6
(22) Anmeldetag: 06.02.1996
(51) Int. Cl.: H02J 1/10, H02J 3/46, G05F 1/59, H02M 7/23, H02M 1/088

(54) **STROMVERSORGUNGSEINRICHTUNG**
POWER SUPPLY DEVICE
DISPOSITIF D'ALIMENTATION EN COURANT

(30) Priorität: 23.02.1995 DE 19506405
(43) Veröffentlichungstag der Anmeldung: 10.12.1997
(73) Patentinhaber: Siemens Nixdorf Informationssysteme AG, 33106 Paderborn (DE)
(72) Erfinder: BUSCH, Peter, D-86179 Augsburg (DE)
(74) Vertreter: Epping, Wilhelm, Dr.-Ing.
(86) Internationale Anmeldenummer: DE9600178
(87) Internationale Veröffentlichungsnummer: WO9626571

(56) Entgegenhaltungen:
- EP-A- 0 419 993
- WO-A-92/03773
- DD-A- 278 011
- DE-A- 3 320 885
- US-A- 4 476 399
- US-A- 4 539 487
- US-A- 5 319 536

## Beschreibung

Die Erfindung betrifft eine Stromversorgungseinrichtung mit voneinander entkoppelt parallelgeschalteten gleichen Einzelnetzteilen mit Ausgängen für gekoppelte Ausgangsspannungen, von denen jeweils eine durch Tastverhältnissteuerung eingeregelt ist und die anderen durch lineare Nachregeleinheiten nachgeregelt sind.

Computeranlagen oder Tower-PCs größerer Datenverarbeitungsleistung erfordern Stromversorgungseinrichtungen höherer Leistung. Als Stromversorgungseinrichtung höherer Leistung werden Stromversorgungseinrichtungen eingesetzt, die aus mehreren gleichen Einzelnetzteilen bestehen. Die Einzelnetzteile sind voneinander entkoppelt parallelgeschaltet. Sie können in der Weise aufgebaut sein, daß sie gekoppelte Ausgangsspannungen erzeugen, von denen eine durch eine Tastverhältnissteuerung und die anderen durch eine lineare Nachregelung eingeregelt sind. Die lineare Nachregelung ist mit einer Verlustleistung behaftet, die umso größer ist, je größer ein Vorhalt zwischen einer ankommenden auszuregelnden und einer abgehenden ausgeregelten Spannung sein muß.

Neben der höheren Leistung werden weiter erhöhte Anforderungen an die Ausfallsicherheit dieser Stromversorgungseinrichtung gestellt. Es wird eine redundante Stromversorgungseinrichtung gefordert, die bei Ausfall eines Einzelnetzteiles ohne Ausfall oder Einbruch von Systemspannungen den Computer weiter versorgt.

Eine weitere Forderung an die Stromversorgungseinrichtung ist, daß ein ausgefallenes Einzelnetzteil ohne Spannungseinbruch bei laufendem Computer getauscht werden kann. Diese Maßnahme ist auch unter dem Begriff "hot board replacement" bekannt.

Schließlich soll eine gleichmäßige Stromaufteilung auf die Einzelnetzteile gewährleistet sein.

Es ist bekannt, die gleichmäßige Aufteilung des Stroms elektronisch zu steuern. Weiter ist bekannt, für eine jede Ausgangsspannung eine eigene Netzteilschaltung zu verwenden. Es ist auch bekannt, um eine Redundanz bei einem Ausgangskurzschluß eines defekten Einzelnetzteiles zu erhalten, die Ausgänge mit Schottky-Dioden von den Systemspannungseingängen des Computers zu entkoppeln. Ferner ist bekannt, die Anzahl der parallelgeschalteten Einzelnetzteile um eins höher zu wählen als die tatsächlich benötigte Anzahl, um dadurch eine Stromversorgungseinrichtung mit Redundanz zu erhalten, bei dem defekte Einzelnetzteile während des Betriebs getauscht werden können.

Es ist auch die Möglichkeit bekannt, Einzelnetzteile mit gekoppelten Ausgangsspannungen parallelzuschalten. Die Ausgangsspannung mit einem höchsten Ausgangsstrom wird über eine Tastverhältnissteuerung auf gleichmäßige Stromaufteilung geregelt. Der oder die gekoppelten Ausgänge werden durch ein Transistorelement als Stellglied in einer Ausgangsleitung auf eine gleichmäßige Stromaufteilung geregelt. Die Regelung der Stromaufteilung kann dabei jeweils auf eine gleiche Art erfolgen: Ein zentraler Regelblock vergleicht jede Ausgangsspannung separat mit einem Sollwert. Die Abweichung von diesem Sollwert wird verstärkt und als Sollstrom des jeweiligen Ausgangs verwendet. Der Iststrom wird erfaßt, mit dem Sollwert verglichen und entsprechend nachgeregelt.

Dieses Verfahren hat jedoch den Nachteil, daß zwar die gleichmäßige Stromaufteilung von gekoppelten Einzelnetzteilen sichergestellt ist, aber die Verluste durch diese Art der Regelung höher sind als unbedingt nötig. Der Grund hierfür ist, daß ein unveränderlich eingestellter Ausgangsspannungssollwert verwendet wird, der sich nicht den tatsächlich vorhandenen Ausgangsspannungen anpaßt.

Aus US-A-5 038 265 ist eine Stromversorgungseinrichtung bekannt, wie sie oben beschrieben ist.

Aus DE 3 941 052 C1 ist eine Schaltungsanordnung zur Parallelschaltung von Stromversorgungseinheiten bekannt, die zur Sicherung einer gleichmäßigen Belastungsaufteilung auf die zu einem Stromversorgungspaket parallel zusammengeschalteten Stromversorgungseinheiten, die eine Spannungs- und dazu unterlagert arbeitende Stromregelungseinrichtung aufweisen, jeweils zwischen der Spannungs- und Stromregelungseinrichtung gleiche Widerstandsschaltnetze als Mittelwertbildner haben, die über wenigstens eine bidirektionale Steuerleitung miteinander verbunden sind und für alle Stromversorgungseinheiten einen gemeinsamen Mittelwert eines Signals ermitteln, das für die jeweilige Stromversorgungseinheit ein Maß für die abzugebende Ausgangsleistung darstellt.

Aus EP-A-0 419 993 ist eine Stromversorgungseinrichtung, bestehend aus voneinander entkoppelt parallelgeschalteten gleichen Einzelnetzteilen bekannt, die Ausgänge für gekoppelte Ausgangsspannungen aufweisen. Bezüglich jedes Einzelnetzteiles ist für den Abgriff eines einem Stellglied innerhalb eines Netzteils zugeordneten gekoppelten Ausgangsstromes als elektrische Istgröße eine Abgriffsschaltung vorgesehen, die unter anderem eine mit Schwellwertschaltern verbundene Senke aufweist. Insgesamt wird durch Bildung eines Sollwertes aus dem Mittelwert der gemessenen Ströme eine gleichmäßige Stromaufteilung auf die einzelnen Netzteile bewirkt. Die Netzteile weisen aber keine solchen gekoppelten Ausgangsspannungen auf, daß jeweils eine durch eine Tastverhältnissteuerung eingeregelt ist und die anderen durch lineare Nachregeleinheiten mit einem linear steuerbaren Stellglied und mit diesem verbundenen Vergleicher nachgeregelt werden. Die vorliegende Stromversorgungseinrichtung löst daher nicht das Problem, bei derartigen Stromversorgungseinrichtungen eine Nachregelung bei minimaler Verlustleistung und gleichzeitig gleichmäßiger Stromaufteilung auf die parallelgeschalteten Einzelnetzteile zu gewährleisten.

Aufgabe der Erfindung ist, bei einer Stromversorgungseinrichtung der eingangs genannten Art eine Nachregelung von Ausgangsspannungen bei minimaler Verlustleistung und gleichzeitig gleichmäßiger Stromaufteilung auf die parallelgeschalteten Einzelnetzteile zu gewährleisten.

Diese Aufgabe wird erfindungsgemäß durch die Merkmale des Anspruchs 1 gelöst.

Bei der diesen Merkmalen zugrundeliegenden Regelung parallelgeschalteter gekoppelter Ausgänge wird nicht mehr ein Ausgangsspannungs-Soll/Istwertvergleich durchgeführt, um einen Stromsollwert zu erhalten. Der Stromsollwert wird erhalten durch Mittelung sämtlicher Stromistwerte.

Durch Toleranzen in den Soll/Iststromvergleichern würden diese die jeweiligen Nachregeltransistoren, die als Stellglieder wirken, jeweils entweder voll durchsteuern oder ganz abschalten. Um den Stromaufteilungsmechanismus dennoch zum Funktionieren zu bringen, wird eine absichtliche Fehlabstimmung des jeweiligen Soll/Iststromvergleichers durch eine Senke herbeigeführt. Dadurch wird jeder Nachregeltransistor am Anfang voll durchsteuern. Bei dem Einzelnetzteil mit der niedrigsten Ausgangsspannung wird der Strom und damit der gemeinsame Stromsollwert dann solange absinken, bis der gemeinsame Stromsollwert die absichtliche Fehlabstimmung der übrigen Soll/Iststromvergleicher kompensiert. Dadurch kommen die übrigen Nachregeltransistoren in den Regelbereich und stellen mit, durch die Fehlabstimmung bedingt, geringfügiger Abweichung eine gleichmäßige Stromaufteilung her. Diese Abweichung kann bei geeigneter Dimensionierung vernachläßigt werden. Da der Nachregeltransistor mit der niedrigsten Ausgangsspannung weiterhin voll durchgesteuert bleibt, stellt sich die niedrigst mögliche Verlustleistung bei allen Einzelnetzteilen ein.

Vorteilhafte Ausgestaltungen der Erfindung sind in den Unteransprüchen gekennzeichnet.

Da die oben angesprochene Nachregelung die niedrigst mögliche Restspannung über den Nachregeltransistoren gewährleistet, können die Aufgaben der Entkoppeldioden und der Nachregeltransistoren von einem gemeinsamen Bauteil übernommen werden: Von einem n-Kanal-MOSFET-Transistor, dessen Drain-Diode in Richtung des Ausgangsstromflusses weist. Der Unterschied zwischen Drain-Dioden-Restspannung und Restspannung des durchgesteuerten Nachregeltransistors von ca. 0,5 Volt dient dann zur Nachregelung von Toleranzen in den Ausgangsspannungen der parallelgeschalteten Einzelnetzteile.

Um die Entkopplung zwischen den Einzelnetzteilen zu bewerkstelligen, können die MOSFET-Nachregeltransistoren in der Weise angeordnet sein, daß deren Drain-Dioden entgegen der Richtung zum Ausgang der Stromversorgungseinrichtung angeordnet sind und daß Entkoppeldioden vorgesehen sind, die in der Weise angeordnet sind, daß sie in Bezug auf einen Rückwärtsstrom in Sperrichtung gepolt sind. Der gleiche Effekt kann auch dadurch bewerkstelligt werden, daß die MOSFET-Nachregeltransistoren in der Weise angeschlossen werden, daß deren Drain-Dioden in Richtung Ausgang der Stromversorgungseinrichtung angeordnet sind. Die vormals benötigten Entkoppeldioden können dann eingespart werden. Bei einem Einzelnetzteil mit Ausgangskurzschluß muß ein betreffender MOSFET-Nachregeltransistor bei Rückwärtsstromfluß aktiv abgeschaltet werden. Hierfür ist lediglich beispielsweise ein zusätzlicher Operationsverstärker notwendig. Trotzdem weist diese Alternative den Vorteil auf, daß mit dem Wegfall der Entkoppeldiode, die beispielsweise 5 A bewältigen können muß, wofür eine Kühlung benötigt wird, auch die Kühlung einschließlich der dafür notwendigen Montage eingespart wird.

Eine Möglichkeit der Realisierung der Fehlabstimmung ist durch einen Spannungsteiler gegeben, von dessen beiden Widerständen einer für die Senke verwendet ist. Für die Senke wäre auch eine Schaltungskomponente denkbar, die mit einer Zener-diode bestückt ist.

Eine Realisierung der Fehlabstimmung derart, daß die Fehlabstimmung auf eine negative Hilfsspannung bezogen ist, hat den Vorteil, daß die kritische Situation beherrscht wird, in der von dem zugehörigen Einzelnetzteil überhaupt kein Strom durchgelassen wird.

Nachfolgend wird ein Ausführungsbeispiel der Erfindung anhand einer Zeichnung näher erklärt. Darin zeigen
- Figur 1: eine Parallelschaltung von über Dioden entkoppelten Einzelnetzteilen mit gekoppelten Ausgangsspannungen in Prinzipdarstellung und
- Figur 2: eine Prinzipschaltung der Stromregelung gemäß der Erfindung.

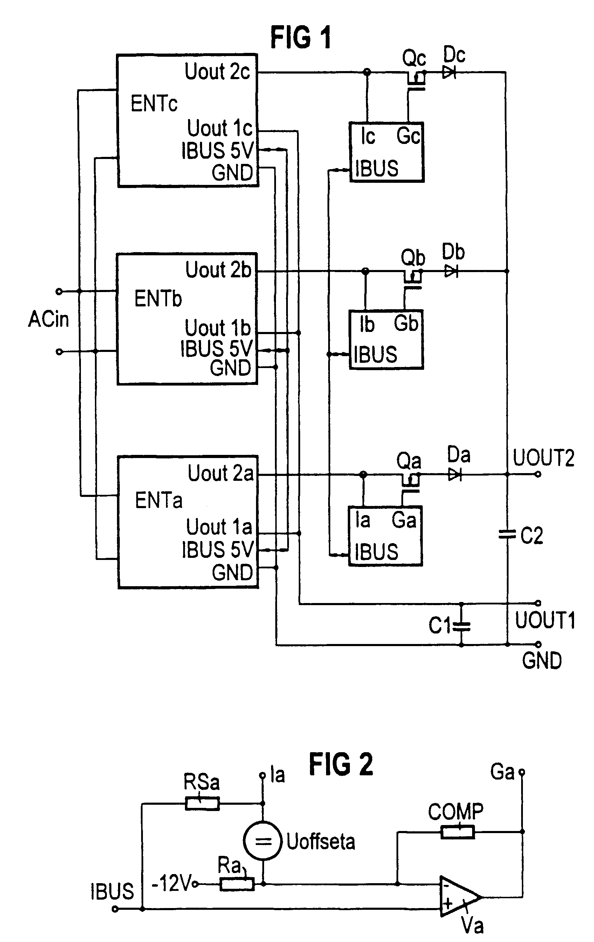

Figur 1 zeigt eine Stromversorgungseinrichtung, die mehrere gleiche Einzelnetzteile ENTa; ENTb; ENTc aufweist. Die Einzelnetzteile ENTa; ENTb; ENTc erzeugen bezogen auf eine Masse GND gekoppelte Ausgangsspannungen Uout1a, Uout2a; Uout1b, Uout2b; Uout1c, Uout2c. Bei den Ausgangsspannungen Uout1a, Uout1b und Uout1c kann es sich beispielsweise um eine 5 Volt Spannung handeln, die über eine Tastverhältnissteuerung eingeregelt wird. Bei den Ausgangsspannungen Uout2a, Uout2b und Uout2c handelt es sich beispielsweise um eine 12 Volt-Spannung.

Die Einzelnetzteile ENTa; ENTb; ENTc sind eingangsseitig parallel geschaltet und an eine Eingangsnetzwechselspannung ACin angeschlossen. Ausgangsseitig sind die Einzelnetzteile ENTa, ENTb, ENTc pro erzeugter Ausgangsspannung ebenfalls parallel geschaltet. Über eine parallele 5-Volt-Busleitung IBUS5V sind die Einzelnetzteile bezüglich der 5-Volt-Ausgangsspannung parallelisiert. Eine gleichmäßige Stromaufteilung auf die Einzelnetzteile ENTa, ENTb, ENTc erfolgt über eine Erfassung des 5-Volt-Ausgangs- oder Primäreingangsstroms, Mittelwertbildung über die 5-Volt-Busleitung IBUS5V und Nachregelung des primären Tastverhältnisses entsprechend der Spannung auf der 5-Volt-Busleitung IBUS5V (vergleiche die eingangs erwähnte Schrift DE 3 941 052 C1). Eine Entkopplung der Einzelnetzteile bezüglich der 5-Volt-Ausgangsspannung ist innerhalb der Kästen für die Einzelnetzteile anzunehmen. Sie ist für die 5-Volt-Ausgangsspannung in der Figur 1 nicht extra dargestellt. Über einen Ausgangskondensator C1 wird die 5-Volt-Ausgangsspannung zu einer Ausgangsspannung UOUT1 der Stromversorgungseinrichtung geglättet.

Analoges trifft auch auf die 12-Volt-Ausgangsspannung der Einzelnetzteile ENTa, ENTb, ENTc zu, die über einen Ausgangskondensator C2 zu einer Ausgangsspannung UOUT2 der Stromversorgungseinrichtung geglättet ist. Ein Unterschied besteht lediglich darin, daß die 12-Volt-Ausgangsspannung an die 5-Volt-Ausgangsspannung gekoppelt ist. Die exakte Einregelung erfolgt über eine linear Nachregelung.

Die 12 Volt-Spannungen der Einzelnetzteile ENTa; ENTb; ENTc werden jeweils vor der Parallelschaltung über lineare Nachregeleinheiten, wie erwähnt, nachgeregelt. Die linearen Nachregeleinheiten weisen linear steuerbare Stellglieder Qa, Qb, Qc auf. Die Stellglieder Qa, Qb, Qc sind in Serie mit Entkoppeldioden Da, Db, Dc geschaltet. Die Entkoppeldioden Da, Db, Dc sind in Richtung Ausgang der Stromversorgungseinrichtung gepolt.

Zu jeder Nachregeleinheit gehört ein in der Figur 1 als Kasten dargestellter Schaltungsteil, dessen Innenleben in der Figur 2 näher dargestellt ist. Insgesamt ist es so, daß der als Kasten dargestellte Schaltungsteil den nachzuregelnden Ausgangsstrom über eine Abgriffsschaltung zugeleitet bekommt. Die Zuleitung erfolgt über Leitungen Ia, Ib, Ic. Der Abgriff kann beispielsweise mittels eines Shunt-Widerstandes erfolgen.

Über Leitungen Ga, Gb, Gc werden die Stellglieder Qa, Qb, Qc von einem jeweiligen Kasten aus angesteuert. Eine Leitung IBUS verbindet die einzelnen Kästen der Nachregeleinheiten.

In der Figur 2 ist beispielhaft der Aufbau der zu dem mit ENTa bezeichneten Einzelnetzteil gehörende Kasten aus der Figur 1 näher dargestellt. Die Darstellung kann analog auf die Kästen für die in der Figur 1 mit ENTb und ENTc bezeichneten Einzelnetzteile übertragen werden.

In dem näher gezeigten Kasten ist ein Vergleicher Va gezeigt, der mit einer Kompensation Comp zur Beseitigung der Schwingneigung beschaltet ist. Bei dem Vergleicher Va kann es sich um einen Operationsverstärker mit einem negativen und einem positiven Eingang handeln. Die Kompensation Comp ist zwischen dem negativen Eingang und dem Ausgang des Vergleichers Va geschaltet.

Der Ausgang des Vergleichers Va ist mit der Leitung Ga verbunden. Der negative Eingang des Vergleichers Va ist über einen Widerstand Ra auf ein negatives Spannungspotential geschaltet. Im Ausführungsbeispiel beträgt das negative Spannungspotential -12 Volt.

An den negativen Eingang des Vergleichers Va ist eine Senke Uoffseta angeschlossen. Der Anschluß erfolgt über eine der Anschlußseiten der Senke. Mit der anderen Anschlußseite ist die Senke Uoffseta mit einer Anschlußseite einer Widerstandskomponente RSa und mit der Leitung Ia verbunden.

Die andere Anschlußseite der Widerstandskomponente RSa ist mit einem positiven Eingang des Vergleichers Va und mit der Leitung IBUS verbunden.

Die Senke Uoffseta kann beispielsweise durch einen Widerstand gebildet sein, der zusammen mit dem Widerstand Ra einen Spannungsteiler bildet. Die Senke Uoffseta könnte aber beispielsweise auch durch eine Zener-Diode und zwei Widerstände gebildet sein.

Der Vergleicher Va führt einen Vergleich eines Sollstroms mit einem Iststrom durch. Der Sollstrom liegt am positiven Eingang und der Iststrom liegt am negativen Eingang des Vergleichers Va an.

Bezüglich der Beschreibung der Funktionsweise der in den Figuren 1 und 2 angegebenen Stromversorgungseinrichtung wird, um Wiederholungen zu vermeiden, auf den einleitenden Teil der vorliegenden Unterlagen verwiesen.

## Patentansprüche

1. Stromversorgungseinrichtung, bestehend aus voneinander entkoppelt parallelgeschalteten gleichen Einzelnetzteilen (ENTa; ENTb; ENTc),
a) die Ausgänge für gekoppelte Ausgangsspannungen (z.B. ENTa: Uout1a, Uout2a) aufweisen, von denen jeweils eine (z.B. Uout1a) durch eine Tastverhältnissteuerung eingeregelt ist und die anderen (z.B. Uout2a) nachgeregelt sind durch lineare Nachregeleinheiten mit einem linear steuerbaren Stellglied (z.B. Qa) und einem mit einem Steuereingang des Stellgliedes (z.B. Qa) verbundenen Vergleicher (z.B. Va), der eine elektrische Sollgröße mit einer elektrischen Istgröße vergleicht und in Abhängigkeit vom Ergebnis des Vergleichs das Stellglied (z.B. Qa) entsprechend ansteuert,
b) denen vor einem jeden linear steuerbaren Stellglied (z.B. Qa) für den Abgriff eines dem Stellglied (z.B. Qa) zugeordneten gekoppelten Ausgangsstromes (z.B. Uout2a) als elektrische Istgröße eine Abgriffsschaltung zugeordnet ist, die gleichzeitig mit jeweils ersten Anschlußseiten einer Widerstandskomponente (z.B. RSa) und einer Senke (z.B. Uoffseta) verbunden ist, von denen die Senke (z.B. Uoffseta) mit einer zweiten Anschlußseite mit einem Eingang für die Istgröße des Vergleichers (z.B. Va) und die Widerstandskomponente (z.B. RSa) mit einer zweiten Anschlußseite mit einem Eingang für die Sollgröße des Vergleichers (z.B. Va) und gleichzeitig mit einer Sammelleitung (IBUS) verbunden ist, die gleichzeitig mit den jeweils zweiten Anschlußseiten der Widerstandskomponenten (RSb; RSc) der Nachregeleinheiten der jeweils weiteren parallelgeschalteten Einzelnetzteilen (z.B. ENTb; ENTc) verbunden ist und somit einen Stromsollwert vorgibt, der durch Mittelung sämtlicher Stromistwerte erhalten wird, und
c) deren jeweilige zugeordnete Abgriffsschaltungen derart dimensionierte Senken haben, daß sie eine definierte Fehlabstimmung des jeweiligen Soll/Iststromvergleichs herbeiführen.

2. Stromversorgungseinrichtung nach Anspruch 1, **dadurch gekennzeichnet**, daß die Stellglieder (z.B. Qa) durch MOSFET-Transistoren gebildet sind, deren Drain-Diode entgegen der Richtung zum Ausgang der Stromversorgungseinrichtung angeordnet ist, und daß die gegenseitige Entkopplung der Einzelnetzteile (ENTa; ENTb; ENTc) für eine jede untereinander gleiche Ausgangsspannung (z.B. Uout2a, Uout2b, Uout2c) durch Entkopplungsdioden (z.B. Da, Db, Dc) gebildet sind, die in Stromflußrichtung eines jeweils zugehörigen Ausgangsstromes gepolt sind und die ausgangsseitig zu einem Gesamtausgang für eine sich ergebende Gesamtausgangsspannung (z.B. UOUT2) zusammengeschaltet sind.

3. Stromversorgungseinrichtung nach Anspruch 1, **dadurch gekennzeichnet**, daß die Stellglieder (z.B. Qa) durch MOSFET-Transistoren gebildet sind, deren Drain-Diode in die Richtung zum Ausgang der Stromversorgungseinrichtung angeordnet ist, und daß die Stellglieder (z.B. Qa; Qb; Qc) für eine jede unter den Einzelnetzteilen (ENTa; ENTb; ENTc) gleiche Ausgangsspannung (z.B. Uout2a, Uout2b, Uout2c) ausgangsseitig zu einem Gesamtausgang für eine sich ergebende Gesamtausgangsspannung (z.B. UOUT2) zusammengeschaltet sind.

4. Stromversorgung nach einem der Ansprüche 1 bis 3, **dadurch gekennzeichnet**, daß die Senke (z.B. Uoffseta) für eine abgegriffene elektrische Istgröße (z.B. Uout2a) durch einen Widerstand gebildet ist.

5. Stromversorgung nach einem der Ansprüche 1 bis 3, dadurch gekennzeichnet, daß die Senke (z.B. Uoffseta) für eine abgegriffene elektrische Istgröße (Ia) durch wenigstens eine Zener-Diode gebildet ist.

6. Stromversorgungseinrichtung nach einem der vorherigen Ansprüche, **dadurch gekennzeichnet**, daß eine Redundanz dadurch vorgesehen ist, daß gegenüber der Anzahl von für einen Anwendungsfall benötigen Einzelnetzteilen (z.B. ENTa; ENTb) ein Einzelnetzteil (z.B. ENTc) zusätzlich vorgesehen ist.

## Claims

1. Power supply device, comprising identical individual power supply units (ENTa; ENTb; ENTc), which are connected in parallel in a mutually decoupled manner,
a) which have outputs for coupled output voltages (for example ENTa: Uout1a, Uout2a), of which in each case one (for example Uout1a) is adjusted by duty ratio control and the others (for example Uout2a) are readjusted by linear readjusting units with a linearly controllable actuator (for example Qa) and a comparator (for example Va), which is connected to a control input of the actuator (for example Qa), compares a desired electrical quantity with an actual electrical quantity and drives the actuator (for example Qa) correspondingly in dependence on the result of the comparison,
b) which are assigned a tapping circuit upstream of each linearly controllable actuator (for example Qa) for the tapping of a coupled output current (for example Uout2a), assigned to the actuator (for example Qa), as actual electrical quantity, which tapping circuit is simultaneously connected to respective first terminal ends of a resistor component (for example RSa) and a sink (for example Uoffseta), of which the sink (for example Uoffseta) is connected by a second terminal end to an input for the actual quantity of the comparator (for example Va) and the resistor component (for example RSa) is connected by a second terminal end to an input for the desired quantity of the comparator (for example Va), and, at the same time, to a bus line (IBUS), which is simultaneously connected to the respective second terminal ends of the resistor components (RSb; RSc) of the readjusting units of the respective further individual power supply units (for example ENTb; ENTc) connected in parallel and thus predetermines a desired current value obtained by averaging all the actual current values, and
c) whose respective assigned tapping circuits have sinks which are dimensioned in such a way that they bring about a defined mismatching of the respective desired/actual current comparison.

2. Power supply device according to Claim 1, characterized in that the actuators (for example Qa) are formed by MOSFET transistors whose drain diode is arranged counter to the direction to the output of the power supply device, and in that the reciprocal decoupling of the individual power supply units (ENTa; ENTb; ENTc) for each mutually identical output voltage (for example Uout2a, Uout2b, Uout2c) is formed by decoupling diodes (for example Da, Db, Dc), which are forward-biased in the direction of a respectively associated output current and, on the output side, are connected together to form an overall output for a resultant overall output voltage (for example UOUT2).

3. Power supply device according to Claim 1, characterized in that the actuators (for example Qa) are formed by MOSFET transistors whose drain diode is arranged in the direction to the output of the power supply device, and in that the actuators (for example Qa; Qb; Qc) for each output voltage (for example Uout2a, Uout2b, Uout2c), the latter being identical among the individual power supply units (ENTa; ENTb; ENTc), are connected together on the output side to form an overall output for a resultant overall output voltage (for example UOUT2).

4. Power supply according to one of Claims 1 to 3, characterized in that the sink (for example Uoffseta) for a tapped actual electrical quantity (for example Uout2a) is formed by a resistor.

5. Power supply according to one of Claims 1 to 3, characterized in that the sink (for example Uoffseta) for a tapped actual electrical quantity (Ia) is formed by at least one zener diode.

6. Power supply device according to one of the preceding claims, characterized in that redundancy is provided by the provision of one individual power supply unit (for example ENTc) more than the number of individual power supply units (for example ENTa; ENTb) required for an application.

## Revendications

1. Dispositif d'alimentation en courant, formé par des blocs d'alimentation individuels (ENTa; ENTb; ENTc) identiques montés en parallèle de manière découplée les uns par rapport aux autres,
a) qui sont pourvus de sorties pour des tensions de sortie couplées (par exemple ENTa: Uout1a, Uout2a) dont une (par exemple Uout1a) est, à chaque fois, réglée par une commande basée sur le taux d'impulsions et dont les autres (par exemple Uout2a) sont ajustées par des unités d'ajustage linéaire comprenant un organe de réglage à commande linéaire (par exemple Qa) et un comparateur (par exemple Va) relié à une entrée de commande de l'organe de réglage (par exemple Qa), lequel comparateur compare une grandeur électrique de consigne à une grandeur électrique effective et commande l'organe de réglage (par exemple Qa) en conséquence, en fonction du résultat de la comparaison,
b) auxquels est associé, avant chacun des organes de réglage à commande linéaire (par exemple Qa), un circuit de prélèvement pour le prélèvement, en tant que grandeur électrique effective, d'un courant de sortie (par exemple Uout2a) couplé associé à l'organe de réglage (par exemple Qa), lequel circuit de prélèvement est relié, en même temps, avec les premières bornes d'un composant à résistance (par exemple RSa) et d'un réducteur de courant (par exemple Uoffseta), respectivement, le réducteur de courant (par exemple Uoffseta) étant relié, par une seconde borne, à une entrée pour la grandeur effective du comparateur (par exemple Va) et le composant à résistance (par exemple RSa) étant relié, par une seconde borne, à une entrée pour la grandeur de consigne du comparateur (par exemple Va) et, en même temps, à une ligne collectrice (IBUS) qui est reliée, en même temps, aux secondes bornes respectives des composants à résistance (RSb; RSc) des unités d'ajustage des autres blocs d'alimentation individuels respectifs montés en parallèle (par exemple ENTb; ENTc) et donne ainsi une valeur de consigne du courant qui est obtenue en faisant la moyenne de toutes les valeurs effectives du courant, et
c) dont les circuits de prélèvement associés respectifs contiennent des réducteurs de courant dimensionnés de manière à provoquer, à chaque fois, une erreur définie de syntonisation de la comparaison des courants de consigne et effectif.

2. Dispositif d'alimentation en courant selon la revendication 1, caractérisé en ce que les organes de réglage (par exemple Qa) sont formés par des transistors MOS dont la diode de drain est située dans le sens contraire à la sortie du dispositif d'alimentation en courant, et en ce que le découplage réciproque des blocs d'alimentation individuels (ENTa; ENTb; ENTc) pour des tensions de sortie (par exemple Uout2a, Uout2b, Uout2c) toutes identiques les unes aux autres est produit par des diodes de découplage (par exemple Da, Db, Dc) qui sont polarisées dans le sens de conduction d'un courant de sortie correspondant respectif et qui sont interconnectées, sur le côté de sortie, pour former une sortie commune pour une tension accumulée de sortie (par exemple UOUT2) résultante.

3. Dispositif d'alimentation en courant selon la revendication 1, caractérisé en ce que les organes de réglage (par exemple Qa) sont formés par des transistors MOS dont la diode de drain est située dans le sens de la sortie du dispositif d'alimentation en courant, et en ce que les organes de réglage (par exemple Qa; Qb; Qc) pour les tensions de sortie (par exemple Uout2a, Uout2b, Uout2c) identiques pour chacun des blocs d'alimentation individuels (ENTa; ENTb; ENTc) sont interconnectés, sur le côté de la sortie, de manière à former une sortie commune pour une tension accumulée de sortie (par exemple UOUT2) résultante.

4. Alimentation en courant selon l'une des revendications 1 à 3, caractérisée en ce que le réducteur de courant (par exemple Uoffseta) pour une grandeur électrique effective prélevée (par exemple Uout2a) est formé par une résistance.

5. Alimentation en courant selon l'une des revendications 1 à 3, caractérisée en ce que le réducteur de courant (par exemple Uoffseta) pour une grandeur électrique effective prélevée (la) est formé par au moins une diode Zener.

6. Dispositif d'alimentation en courant selon l'une des revendications précédentes, caractérisé en ce que, pour obtenir une redondance, on prévoit, par rapport au nombre de blocs d'alimentation individuels (par exemple ENTa; ENTb) nécessaires pour une application, un bloc d'alimentation individuel supplémentaire (par exemple ENTc).
